(19) **Europäisches Patentamt**
**European Patent Office**
**Office européen des brevets**

(11) Veröffentlichungsnummer : **0 587 683 B1**

(12) **EUROPÄISCHE PATENTSCHRIFT**

(45) Veröffentlichungstag der Patentschrift :
**22.02.95 Patentblatt 95/08**

(51) Int. Cl.⁶ : **G01J 3/12**, G01J 3/28,
G02B 5/06

(21) Anmeldenummer : **92911706.7**

(22) Anmeldetag : **05.06.92**

(86) Internationale Anmeldenummer :
**PCT/EP92/01270**

(87) Internationale Veröffentlichungsnummer :
**WO 92/21948 10.12.92 Gazette 92/31**

(54) **ECHELLE-POLYCHROMATOR.**

(30) Priorität : **06.06.91 DE 4118760**

(43) Veröffentlichungstag der Anmeldung :
**23.03.94 Patentblatt 94/12**

(45) Bekanntmachung des Hinweises auf die
Patenterteilung :
**22.02.95 Patentblatt 95/08**

(84) Benannte Vertragsstaaten :
**DE FR GB**

(56) Entgegenhaltungen :
**DE-A- 3 326 868
DE-C- 3 403 372
FR-A- 2 154 641
US-A- 2 605 672
US-A- 3 514 192
M. Born und E. Wolf: "Principles of Optics, 6.
Ausgabe, Absatz 4.7.2: "Dispersion by
prism", 1980, Pergamon, Oxford, GB, Seiten
177-180**

(73) Patentinhaber : **BODENSEEWERK
PERKIN-ELMER GMBH
Askaniaweg 4
D-88662 Überlingen (DE)**

(72) Erfinder : **FLOREK, Stefan
Schillerstrasse 7
D-1183 Berlin (DE)**
Erfinder : **BECKER-ROSS, Helmut
Karlstrasse 26
D-1170 Berlin (DE)**

(74) Vertreter : **Patentanwälte Grünecker,
Kinkeldey, Stockmair & Partner
Maximilianstrasse 58
D-80538 München (DE)**

EP 0 587 683 B1

## Beschreibung

## Technisches Gebiet

Die Erfindung betrifft einen Echelle-Polychromator, dem ein Vormonochromator mit einem Prisma vorgeschaltet ist, wobei der Vormonochromator und der Echelle-Polychromator durch einen gemeinsamen Spalt optisch miteinander verbunden sind.

Ein Polychromator ist ein Spektralapparat, bei welchem durch ein dispergierendes Element ein Spektrum auf einem Detektorarray erzeugt wird, also einer Reihe von dicht nebeneinander angeordneten Detektorelementen. Auf diese Weise werden die spektralen Intensitäten bei den verschiedenen Wellenlängen eines von dem Detektorarray erfaßten Wellenlängenbereiches gleichzeitig gemessen. Bei einem Monochromator wird demgegenüber ein Spektrum in der Ebene eines Austrittsspaltes erzeugt. Durch diesen Austrittsspalt tritt dann das Licht aus einem bestimmten, relativ engen Wellenlängenbereich aus. Das durch den Austrittsspalt austretende Licht kann dann auf einen einzigen Detektor, z.B. einen Photomultiplier, fallen. Das durch den Austrittsspalt fallende Licht kann aber auch auf einen weiteren Monochromator oder Polychromator geleitet werden. In letzterem Falle spricht man von einem Vormonochromator. Vormonochromatoren dienen der Verminderung von Störlicht. Bei Gittermonochromatoren haben Vormonochromatoren die Aufgabe, Licht störender Ordnungen zu eliminieren.

Ein Echelle-Gitter ist ein Gitter mit dreieckigem Furchenprofil, dessen Furchenabstände groß gegen die Wellenlänge sind. Ein Echelle-Gitter benutzt hohe Interferenz-Ordnungen. Ein Polychromator, der mit einem Echelle-Gitter arbeitet, ist ein Echelle-Polychromator.

## Zugrundeliegender Stand der Technik

Verschiedene Typen von Monochromatoren und Polychromatoren sind beschrieben in einem Buch von J. Sternberg "The Design of Optical Spectrometers", Chapman and Hall, 1969, und in einem Buch von Y. Talmi "Multichannel Image Detectors", American Chemical Society, 1979.

Die US-A-4 820 048 beschreibt einen Echelle-Polychromator in Kombination mit einem neuen Festkörper-Detektorarray. Dort wird zur simultanen Erfassung des gesamten Wellenlängenbereiches eine Trennung der Ordnungen innerhalb des Echelle-Polychromators vorgenommen. Dabei ergibt sich eine Begrenzung der Höhe des Eintrittsspaltes. Außerdem treten Abbildungsfehler in den Randbereichen des Spektrums auf. Der Streulichtpegel ist relativ hoch.

Die GB-A-2 204 964 beschreibt einen Echelle-Polychromator für die Multielement-Analyse. Eine Lichtquelle erzeugt ein Lichtbündel, das durch zwei gekreuzte Eintrittsspalte begrenzt ist. Das Lichtbündel fällt auf einen Kollimatorspiegel. Der Kollimatorspiegel leitet das parallelgerichtete Lichtbündel durch ein Dispersionsprisma auf ein Echelle-Gitter. Die von dem Echelle-Gitter gebeugten Lichtbündel treten nochmals durch das Dispersionsprisma geleitet und werden von einem Kameraspiegel auf einem zweidimensionalen Detektorarray gesammelt. Das Dispersionsprisma bewirkt eine Dispersion in einer zur Dispersionsrichtung des Echelle-Gitters senkrechten Richtung und damit eine Trennung der verschiedenen Ordnungen des Echelle-Gitters. Das Detektorarray enthält Detektorelemente am Ort charakteristischer Spektrallinien der verschiedenen zu bestimmenden chemischen Elemente.

Es ist ein Echelle-Monochromator bekannt, bei welchem die Ordnungen durch einen Vormonochromator getrennt werden. Der Vormonochromator erzeugt ein Spektrum in der Ebene eines Eintrittsspaltes des hochauflösenden Echelle-Monochromators.

Von diesem Spektrum gelangt nur ein begrenzter Wellenlängenbereich in den Echelle-Monochromator. Der Echelle-Monochromator erfaßt dann aus diesem Wellenlängenbereich mit einem Austrittsspalt und einem dahinter angeordneten Detektor einen noch engeren Wellenlängenbereich. Solche Echelle-Doppelmonochromatoren erreichen ein hohes spektrales Auflösungsvermögen bei extrem niedrigem Streulichtanteil. Durch die größere Höhe der Spalte ergibt sich ein hoher Lichtleitwert. Es kann jedoch jeweils nur eine Spektralposition innerhalb des gesamten Spektrums untersucht werden (P.W.J.M. Boumans und J.J.A.M. Vrakking, "Spectrichimica Acta" Bd. 39B No. 9-11, 1239).

Die DE-C-3 634 485 beschreibt ein Flüssigkeitsprisma mit veränderbarem Prismenwinkel zur Erzeugung spektral verzerrter Photographien und Projektionen.

Durch die DE-A-33 26 868 ist ein Echelle-Polychromator mit vorgeschaltetem Prismenmonochromator bekannt. Der Prismenmonochromator ist mit dem Echelle-Polychromator durch einen gemeinsamen Spalt optisch verbunden.

## Offenbarung der Erfindung

Der Erfindung liegt die Aufgabe zugrunde, einen Spektralapparat zu schaffen, der mit hoher Auflösung nicht nur eine bestimmte Spektralposition sondern zur gleichen Zeit auch deren Umgebung zu untersuchen gestattet, wobei Sorge getragen ist daß -abhängig von der jeweils beobachteten mittleren Wellenlänge- einerseits das Detektorarray vollständig ausgenutzt wird und andererseits störende Ordnungen, also Licht, das an dem Echelle-Gitter überlappende Spektren verschiedener Ordnung erzeugen würde, von dem Echelle-Polychromator ferngehalten werden.

Erfindungsgemäß wird diese Aufgabe ausgehend von einem Echelle-Polychromator der eingangs genannten Art dadurch gelöst, daß die Lineardispersion des Vormonochromators dadurch veränderbar ist, daß der Prismenwinkel des Prismas einstellbar ist.

Das Gerät nach der Erfindung benutzt ein Echelle-Gitter in Verbindung mit einem linearen Detektorarray, durch den gleichzeitig eine Vielzahl von Wellenlängen getrennt erfaßt wird. Es handelt sich insoweit um einen Polychromator. Das Gerät ist jedoch nicht dafür eingerichtet, einen großen Wellenlängenbereich zu erfassen, wie etwa der Echelle-Polychromator nach der vorerwähnten GB-A-2 204 964. Vielmehr wird mit hoher Auflösung durch das Echelle-Gitter eine bestimmte spektrale Position und deren nähere Umgebung untersucht. Zu diesem Zweck ist dem Echelle-Polychromator ein einfacher Prismen-Vormonochromator vorgeschaltet. Der Vormonochromator läßt nur einen begrenzten Spektralbereich zu dem Echelle-Polychromator durch. Durch die Einstellbarkeit des Prismenwinkels wird Sorge getragen, daß -abhängig von der jeweils beobachteten mittleren Wellenlänge- einerseits das Detektorarray vollständig ausgenutzt wird und andererseits störende Ordnungen, also Licht, das an dem Echelle-Gitter überlappende Spektren verschiedener Ordnung erzeugen würde, von dem Echelle-Polychromator ferngehalten werden.

Die Erfindung schafft ein Gerät, das eigentlich ein Zwischending zwischen einem Monochromator und einem Polychromator ist: Das Gerät enthält einen Monochromator, nämlich den Vormonochromator, der einen engen Spektralbereich durch einen Eintrittsspalt des Echelle-Polychromators leitet. Das Gerät enthält aber auch einen Polychromator mit einem Detektorarray. Das Detektorarray beobachtet aber hier mit hoher Auflösung die Umgebung einer eingestellten mittleren Wellenlänge, nicht ein ausgedehntes, volles Spektrum.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

## Kurze Beschreibung der Zeichnungen

Fig.1    ist eine Draufsicht auf einen Echelle-Polychromator mit Prismen-Vormonochromator.

Fig.2    zeigt eine andere Ausführung eines Prismas mit veränderbarer Winkeldispersion.

## Bevorzugte Ausführungen der Erfindung

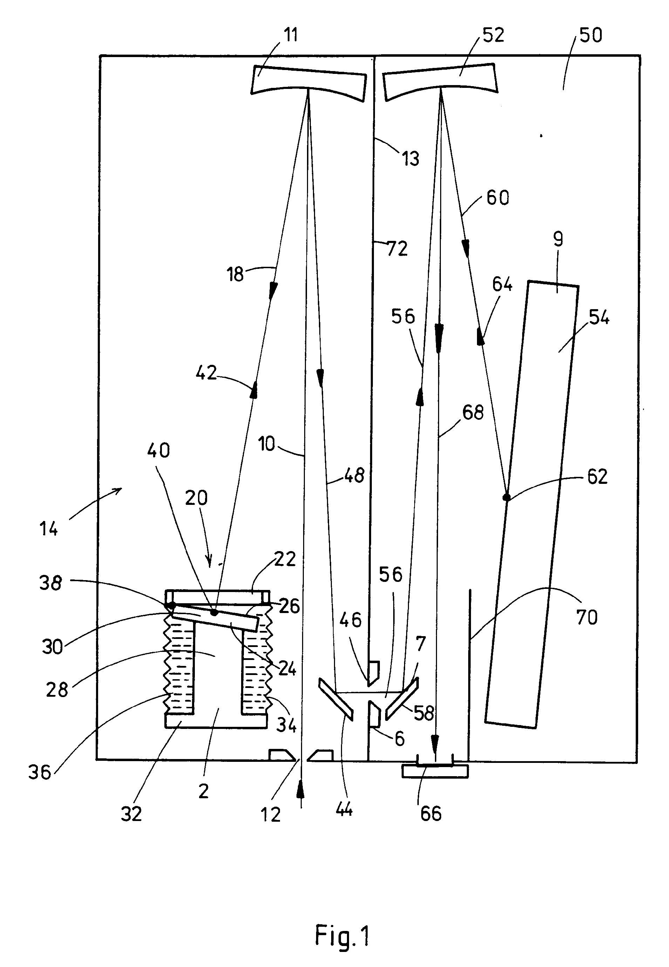

In Fig.1 tritt ein Lichtbündel 10 von einer (nicht dargestellten) Lichtquelle durch einen Eintrittsspalt 12 eines Vormonochromators 14. Der Vormonochromator 14 ist ein Prismen-Monochromator in Littrow-Anordnung. Das Lichtbündel 10 fällt auf einen parabolischen Kollimatorspiegel 16. Der Kollimatorspiegel 16 erzeugt aus dem divergenten Lichtbündel 10 ein paralleles Lichtbündel 18. Das parallele Lichtbündel 18 fällt auf ein Prisma 20.

Das Prisma 20 ist ein Flüssigkeits-Spiegelprisma mit veränderbarem Prismenwinkel. Das Prisma 20 enthält eine für das untersuchte Licht transparente, planparallele, vordere Platte 22 und eine hintere Platte 24. Die hintere Platte 24 ist an ihrer dem Kollimatorspiegel 16 zugewandten Vorderseite 26 verspiegelt. An der hinteren Platte 24 ist ein Spiegelhalter 28 befestigt. Der Spiegelhalter 28 hat zylindrische Grundform. An der plattenseitigen Stirnfläche 30 ist der Spiegelhalter 28 abgeschrägt. An dem entgegengesetzten Ende bildet der Spiegelhalter 28 einen Flansch 32. Ein Balg 34 erstreckt sich zwischen dem Flansch 32 und dem Rand der vorderen Platte 22. Zwischen der Platte 22, dem Balg 34 und dem Flansch 32 und um den Spiegelhalter 28 herum ist ein Hohlraum 36 gebildet. Dieser Hohlraum 36 ist mit einer lichtbrechenden Flüssigkeit gefüllt. Diese Flüssigkeit füllt auch den im Querschnitt dreieckigen Raum zwischen den beiden Platten 22 und 24.

Die Platten 22 und 24 sind längs einer Kante 38 schwenkbar miteinander verbunden. Außerdem ist das gesamte Prisma 20 mit dem Spiegelhalter 28 und dem Balg 34 um eine Achse 40 schwenkbar gelagert. Die Achse 40 verläuft parallel zu der Kante 38 und zu der Richtung des Eintrittsspaltes 12. Die Achse 40 liegt in der Ebene der verspiegelten Vorderfläche 26 der Platte 24

Die lichtbrechende Flüssigkeit ist destilliertes Wasser. Destilliertes Wasser hat im gesamten Wellenlängenbereich von 190 nm bis 850 nm hohe Transmission. Der Brechungsindex von destilliertem Wasser zeigt nur geringe Temperaturabhängigkeit.

Die Platte 22 besteht aus geschmolzenem Quarz. Der Balg ist aus PTFE hergestellt.

Das parallele Lichtbündel 18 wird durch das von der Platte 22 und der zwischen den Platten 22 und 24 befindlichen Flüssigkeit gebildete Prisma gebrochen und spektral zerlegt. Die so erhaltenen Lichtbündel werden von der verspiegelten Vorderfläche 26 der Platte 24 reflektiert. Die reflektierten Lichtbündel treten nochmals durch das Prisma 20 und erfahren eine erneute Dispersion. Die spektral zerlegten Lichtbündel laufen dann zu dem Kollimatorspiegel 16 zurück, wie durch Pfeil 42 angedeutet ist, und werden von dem Kollimatorspiegel 16 über einen Umlenkspiegel 44 in der Ebene eines Spaltes 46 gesammelt. In der Ebene des Spaltes 46 wird ein Spektrum als Bild des Eintrittsspaltes 12 erzeugt. In Fig.1 ist nur der Mittelstrahl des Lichtbündels 48 dargestellt, das auf der Mitte des Spaltes 46 fokussiert wird.

Das Strahlenbündel 10 tritt mit einem Öffnungsverhältnis von F/8 durch den Eintrittsspalt 12 des Vormonochromators 14. Das Strahlenbündel wird an dem parabolischen Kollimatorspiegel 16 unter einem außeraxialen Winkel von etwa 8° reflektiert. Der Kollimatorspiegel 16 hat eine Brennweite von 400 mm.

Der Spalt 46 läßt aus dem in der Ebene des Spaltes 46 erzeugten Spektrum einen engen Spektralbereich durch. Der Spalt 46 bildet den Eintrittsspalt eines Echelle-Polychromators 50. Der Echelle-Polychromator 50 enthält einen Kollimatorspiegel 52 und ein Echelle-Gitter 54. Von dem Spalt 46 geht ein divergentes Lichtbündel 56 mit dem engen Spektralbereich aus. Das Lichtbündel 56 wird durch einen Umlenkspiegel 58 umgelenkt. und fällt auf den Kollimatorspiegel 52. Der Kollimatorspiegel 52 erzeugt aus dem divergenten Lichtbündel 56 ein paralleles Lichtbündel 60. Das parallele Lichtbündel 60 fällt auf das Echelle-Gitter 54. Das Echelle-Gitter ist um eine Achse 62 verschwenkbar. Die Achse 62 ist parallel zu den Gitterfurchen. Die Gitterfurchen verlaufen senkrecht zur Papierebene in Fig.1.

Das Echelle-Gitter 54 bewirkt eine Zerlegung des durch den Eintrittsspalt 46 eingetretenen Lichts. Von dem Echelle-Gitter gehen in verschiedene Richtungen parallele Lichtbündel mit den verschiedenen Wellenlängen des von dem Spalt ausgeblendeten Spektralbereiches aus. Die gebeugten Lichtbündel werden im wesentlichen in die Einfallsrichtung auf den Kollimatorspiegel 52 zurückgeworfen. Das ist durch einen Pfeil 64 in Fig.1 angedeutet. Die Lichtbündel mit den verschiedenen Wellenlängen werden durch den Kollimatorspiegel 52 in der Ebene eines Detektorarrays 66 fokussiert. Auf dem Detektorarray 66 wird ein Spektrum erzeugt. Das Spektrum erstreckt sich über das Detektorarray 66 von links nach rechts in Fig.1. Das der Mittenwellenlänge entsprechende Lichtbündel ist in Fig.1 mit 68 bezeichnet. Eine Blende 70 schirmt das Detektorarray gegen Störstrahlung ab. Zwischen dem Vormonochromator 14 und dem Echelle-Polychromator 50 ist eine Trennwand 72 vorgesehen. Der Eintrittsspalt 46 sitzt in dieser Trennwand 72.

Das Echelle-Gitter 54 hat eine Strichzahl von 75 Furchen pro Millimeter und einen Blaze-Winkel von etwa 76°. Das Echelle-Gitter 54 wird im Interesse einer hohen Beugungseffektivität jeweils nahe der Autokollimation betrieben. Der Kollimatorspiegel 52 ist ein Parabolspiegel mit einer Brennweite von 400 mm. Das Detektorarray ist eine CCD-Zeile mit 512 Detektorelementen von je 0,023 mm Breite und 0,480 mm Höhe. Die Spaltbreite des Eintrittsspaltes 12 des Vormonochromators 14 ist doppelt so groß wie die Spaltbreite des Eintrittsspaltes 46 des Echelle-Polychromators 50. Damit wird der Eintrittsspalt des Echelle-Polychromators 56 für alle Wellenlängen, die mit dem Detektorarray gemessen werden sollen, vollständig ausgeleuchtet.

Durch Einstellung der Platte 22 um die Achse 38 und der verspiegelten Platte 24 (zusammen mit dem gesamten Prisma 20) um die Achse 40 wird ein enger Wellenlängenbereich festgelegt, der durch den Spalt 46 hindurchtritt. Die Mittenwellenlänge des Bereiches wird durch das Lichtbündel 48 bestimmt, das nach der Brechung durch das Prisma 20 senkrecht von der verspiegelten Oberfläche 26 der Platte 24 reflektiert wird. Die spektrale Breite des durch den Spalt durchgelassenen Wellenlängenbereiches ist umso kleiner, je größer die Lineardispersion des Vormonochromators ist, hier also je größer die Winkeldispersion des Prismas 20 ist. Diese Winkeldispersion kann erhöht werden, indem die Platte 22 gegenüber der Platte 24 verschwenkt wird. Das dabei zwischen den Platten 22 und 24 verdrängte oder zwischen die Platten 22 und 24 angesaugte Flüssigkeitsvolumen wird von dem elastischen Balg 34 ausgeglichen.

Der gewählte Spektralbereich am Eingangsspalt 46 des Echelle-Polychromators 50 mit der gewählten Mittenwellenlänge und der gewählten spektralen Breite wird nun durch den Echelle-Polychromator mit hoher Dispersion aufgespalten, und es wird ein entsprechendes Spektrum auf dem Detektorarray 66 erzeugt. Dazu wird das Echelle-Gitter 54 so verschwenkt, daß die Mittenwellenlänge etwa in der Mitte des Detektorarrays 66 liegt. Die Winkeldispersion des Prismas 20 und damit die spektrale Breite des Spektralbereiches wird so gewählt, daß die Länge des Detektorarrays 66 optimal ausgenutzt wird. Zu diesem Zweck wird die Winkeldispersion des Prismas 20 so gewählt, daß die folgende Bedingung erfüllt ist:

$$2sg(\sin\alpha + \sin\beta)/(f_1\lambda^2) < d\delta/d\lambda < sf_2(\sin\alpha + \sin\beta)/(l\ f1\lambda\cos\beta),$$

wobei $d\delta/d\lambda$ die Winkeldispersion des Prismas, $\lambda$ die Wellenlänge, s die Breite des Eintrittsspaltes des Echelle-Polychromators, g die Gitterkonstante des Echelle-Gitters des Echelle-Polychromators, $\alpha,\beta$ Einfalls- bzw. Beugungswinkel am Echelle-Gitter, $f_1$ die Kamerabrennweite des Vormonochromators, $f_2$ die Kamerabrennweite des Echelle-Polychromators und l die Länge des Detektorarrays des Echelle-Polychromators ist.

4

Auf diese Weise ist sichergestellt, daß die Länge des Detektorarrays 66 voll ausgenutzt ist, also das zur vollständigen Ausleuchtung des Detektorarrays erforderliche Wellenlängenbereich durch den Eintrittsspalt 46 in den Echelle-Polychromator gelangt, und andererseits dieser Spektralbereich kleiner ist als der freie Wellenlängenbereich der benutzten Ordnung des Echelle-Gitters 54, so daß also keine Überlappung von Ordnungen stattfindet.

Der Echelle-Polychromator mit Vormonochromator kann in verschiedener Weise abgewandelt werden.

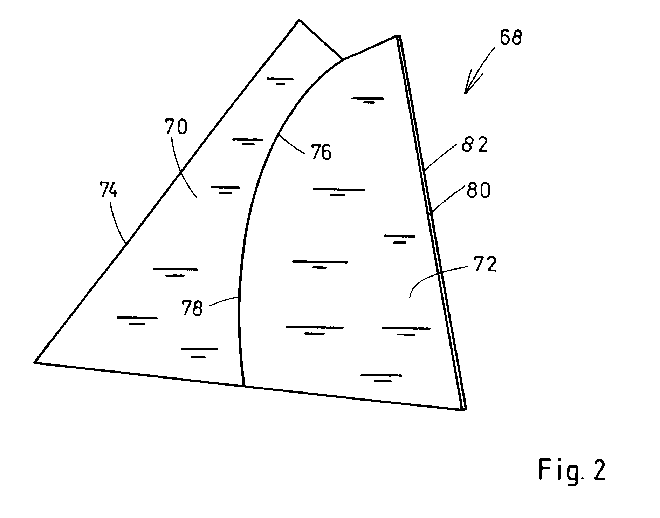

Fig.2 schematisch zeigt eine abgewandelte Form des Prismas mit veränderlicher Winkeldispersion für den Vormonochromator.

Das Prisma 68 besteht aus zwei massiven Körpern 70 und 72 aus einem in dem benutzten Wellenlängenbereich transparenten, dispergierenden Material, z.B. Quarz. Der Körper 70 hat eine plane Vorderfläche 74. Auf der Rückseite weist der Körper 70 eine konkav-zylindrische Fläche 76 auf. Der Körper 72 weist eine zu der Fläche 76 komplementäre, konvex-zylindrische vordere Fläche 78 auf. Die Flächen 76 und 78 liegen so aneinander an, daß Strahlen im wesentlichen glatt durch die Trennfläche hindurchgehen. Erforderlichenfalls kann zwischen die Flächen 76 und 78 eine Flüssigkeit eingebracht werden, deren Brechungsindex und Dispersion im wesentlichen die gleichen Werte haben wie das Material der Körper 70 und 72. Der Körper 72 hat eine plane rückwärtige Fläche 80. Die Fläche 80 ist mit einer Verspiegelung 82 versehen. Durch Verschwenken der beiden Körper 70 und 72 gegeneinander kann der Prismenwinkel zwischen den Flächen 74 und 80 stetig verändert werden.

Statt zylindrischer Flächen können z.B. auch sphärische Flächen vorgesehen sein.

## Patentansprüche

1. Echelle-Polychromator (50), dem ein Vormonochromator (14) mit einem Prisma (20) vorgeschaltet ist, wobei der Vormonochromator (14) und der Echelle-Polychromator (50) durch einen gemeinsamen Spalt (46) optisch miteinander verbunden sind, **dadurch gekennzeichnet, daß** die Lineardispersion des Vormonochromators (14) dadurch veränderbar ist, daß der Prismenwinkel des Prismas (20) einstellbar ist.

2. Echelle-Polychromator nach Anspruch 1, **dadurch gekennzeichnet, daß** das Prisma (20) eine vordere Platte (22) und eine rückwärtige Platte (24) aufweist, die einen veränderbaren Winkel bilden und zwischen sich einen mit Flüssigkeit gefüllen Hohlraum einschließen.

3. Echelle-Polychromator nach Anspruch 1 oder 2, **dadurch gekennzeichnet, daß** der Vormonochromator (14) ein Prismen-Monochromator in Littrow-Anordnung mit einem Littrow-Spiegel (24,26) ist.

4. Echelle-Polychromator nach Anspruch 3, **dadurch gekennzeichnet, daß** die rückwärtige Platte (24) des Prismas (20) zur Bildung des Littrow-Spiegels reflektierend ausgebildet ist.

5. Echelle-Polychromator nach Anspruch 4, **dadurch gekennzeichnet, daß** der Littrow-Spiegel (24,26) und die vordere Platte (22) so gemeinsam verstellbar sind, daß auf einen Eintrittsspalt (46) des Echelle-Polychromators (50) ein Spektralbereich mit einer wählbaren Mittenwellenlänge geleitet wird, wobei die Winkeldispersion des Prismas (20) in Abhängigkeit von der gewählten Wellenlänge so gewählt ist, daß einerseits ein Detektorarray (66) des Echelle-Polychromators (50) optimal ausgeleuchtet und andererseits eine Überlappung von Ordnungen des von den Echelle-Polychromator (50) erzeugten Spektrums ausgeschlossen ist.

6. Echelle-Polychromator nach Anspruch 5, dadurch gekennzeichnet, daß die Winkeldipsersion des Prismas (20) für eine vorgegebene Wellenlänge der Bedingung

$$2sg(\sin\alpha + \sin\beta)/(f_1\lambda^2) < d\delta/d\lambda < sf_2(\sin\alpha + \sin\beta)/(l\ f1\lambda\ \cos\beta)$$

genügt, wobei $d\delta/d\lambda$ die Winkeldispersion des Prismas, $\lambda$ die Wellenlänge, s die Breite des Eintrittsspaltes des Echelle-Polychromators, g die Gitterkonstante des Echelle-Gitters des Echelle-Polychromators, $\alpha,\beta$ Einfalls- bzw. Beugungswinkel am Echelle-Gitter, $f_1$ die Kamerabrennweite des Vormonochromators, $f_2$ die Kamerabrennweite des Echelle-Polychromators und l die Länge des Detektorarrays des Echelle-Polychromators ist.

7. Echelle-Polychromator nach Anspruch 1, **dadurch gekennzeichnet, daß** das Prisma (68) aus zwei massiven Teilen (70,72) besteht, von denen einer die plane Vorderfläche (74) und der andere die plane rückwärtige Fläche (80) des Prismas (68) bildet und die einander zugewandte konkav-zylindrische bzw. komplementär dazu konvex-zylindrische, aneinander anliegende, eine Relativverdrehung der beiden Teile (70,72) gestattende Flächen (76,78) aufweisen.

8. Echelle-Polychromator nach Anspruch 1, **dadurch gekennzeichnet, daß** das Prisma aus zwei massiven Teilen besteht, von denen einer die plane Vorderfläche und der andere die plane rückwärtige Fläche des Prismas bildet und die einander zugewandte konkav-sphärische bzw. komplementär dazu konvex-sphärische, aneinander anliegende, eine Relativverdrehung der beiden Teile gestattende Flächen aufweisen.

9. Echelle-Polychromator nach Anspruch 5, dadurch gekennzeichnet, daß ein Eintrittsspalt (12) des Vormonochromators (14) die doppelte Breite hat wie der Eintrittsspalt (46) des Echelle-Polychromators (50).

## Claims

1. An echelle polychromator (50) preceded by a front monochromator (14) with a prism (20), the front monochromator (14) and the echelle polychromator (50) being optically interconnected by a common slit (46), characterised in that the linear dispersion of the front monochromator (14) is variable by adjustment of the prism angle of the prism (20).

2. An echelle polychromator according to claim 1, characterised in that the prism (20) comprises a front plate (22) and a back plate (24) which form a variable angle and enclose between them a liquid-filled cavity.

3. An echelle polychromator according to claim 1 or 2, characterised in that the front monochromator (14) is a prism monochromator in a Littrow arrangement with a Littrow mirror (24, 26).

4. An echelle polychromator according to claim 3, characterised in that the back plate (24) of the prism (20) is reflecting so as to form the Littrow mirror.

5. An echelle polychromator according to claim 4, characterised in that the Littrow mirror (24, 26) and the front plate (22) are jointly so adjustable that a spectral zone having a selective central wavelength is fed to an entry slit (46) of the echelle polychromator (50), the angle dispersion of the prism (20) being so selected in dependence on the selected wavelength that, on the one hand, a detector array (66) of the echelle polychromator (50) receives optimal illumination and, on the other hand, any overlap of orders of the spectrum produced by the echelle polychromator (50) is precluded.

6. An echelle polychromator according to claim 5, characterised in that the angle dispersion of the prism (20) satisfies the equation
$$2sg(\sin\alpha + \sin\beta)/(f_1\lambda^2) < d\delta/d\lambda < sf_2(\sin\alpha + \sin\beta)/(1\ f1\lambda\ \cos\beta)$$
for a given wavelength, where $d\delta/d\lambda$ is the angle dispersion of the prism, $\lambda$ the wavelength, s is the width of the entry slit of the echelle polychromator, g is the echelle grating constant of the echelle polychromator, $\alpha$, $\beta$ the angle of incidence and angle of diffraction at the echelle grating, $f_1$ the camera focal length of the front monochromator, $f_2$ the camera focal length of the echelle polychromator, and l the length of the echelle polychromator detector array.

7. An echelle polychromator according to claim 1, characterised in that the prism (68) consists of two solid parts (70, 72), one of which forms the flat front surface (74) and the other the flat back surface (80) of the prism (68) and which comprise facing concave-cylindrical and matching convex-cylindrical abutting surfaces (76, 78) permitting relative rotation of the two parts 70, 72.

8. An echelle polychromator according to claim 1, characterised in that the prism consists of two solid parts, one of which forms the flat front surface and the other the flat back surface of the prism and which comprise facing concave-spherical and matching convex-spherical abutting surfaces permitting a relative rotation of the two parts.

9. An echelle polychromator according to claim 5, characterised in that an entry slit (12) of the front monochromator (14) is twice as wide as the entry slit (46) of the echelle polychromator (50).

**Revendications**

1. Polychromateur à échelle (50), qui est précédé d'un monochromateur préalable (14) muni d'un prisme (20), le polychromateur à échelle (50) et le monochromateur préalable (14) étant optiquement reliés entre eux par une fente commune (46), **caractérisé** en ce que la dispersion linéaire du monochromateur préalable (14) peut être modifiée par le fait que l'angle du prisme (20) peut être réglé.

2. Polychromateur à échelle selon la revendication 1, **caractérisé** en ce que le prisme (20) présente une plaque antérieure (22) et une plaque postérieure (24), qui forment un angle modifiable et incluent entre elles un espace creux rempli de liquide.

3. Polychromateur à échelle selon la revendication 1 ou 2, **caractérisé** en ce que le monochromateur préalable (14) est un monochromateur à prisme en disposition Littrow, avec un miroir de Littrow (24, 26).

4. Polychromateur à échelle selon la revendication 3, **caractérisé** en ce que la plaque arrière (24) du prisme (20) est réalisée réfléchissante afin de former le miroir de Littrow.

5. Polychromateur à échelle selon la revendication 4, **caractérisé** en ce que le miroir de Littrow (24, 26) et la plaque antérieure (22) sont conjointement réglables de telle sorte qu'une plage spectrale dont la longueur d'onde moyenne peut être choisie est dirigée sur une fente d'entrée (46) du polychromateur à échelle (50), la dispersion angulaire du prisme (20) étant choisie, en fonction de la longueur d'onde choisie, de façon, d'une part à illuminer optimalement un réseau détecteur (66) du polychromateur à échelle (50), et d'autre part à empêcher la superposition de niveaux du spectre produit par le polychromateur à échelle (50).

6. Polychromateur à échelle selon la revendication 5, **caractérisé** en ce que la dispersion angulaire du prisme (20) satisfait, pour une longueur d'onde prédéterminée, à la condition suivante:
$$2\,sg(\sin\alpha + \sin\beta)\,/\,(f_1\lambda^2) < d\delta/d\lambda < sf_2(\sin\alpha + \sin\beta)/(I\,f_1\lambda\,\cos\beta),$$
où $d\delta/d\lambda$ est la dispersion angulaire du prisme, $\lambda$ la longueur d'onde, s la largeur de la fente d'entrée du polychromateur à échelle, g la constante de grille de la grille à échelle du polychromateur à échelle, $\alpha$, $\beta$ respectivement l'angle d'incidence et l'angle de diffraction sur la grille à échelle, $f_1$ la focale du monochromateur préalable, $f_2$ la focale du polychromateur à échelle et I la longueur du réseau détecteur du polychromateur à échelle.

7. Polychromateur à échelle selon la revendication 1, **caractérisé** en ce que le prisme (68) est constitué de deux pièces massives (70, 72) dont l'une forme la face antérieure plane (74) et l'autre la face postérieure plane (80) du prisme (68), et qui présentent des faces en vis-à-vis (76, 78) de formes complémentaires, respectivement cylindrique concave et cylindrique convexe, appliquées l'une contre l'autre, qui autorisent une rotation relative des deux pièces (70, 72).

8. Polychromateur à échelle selon la revendication 1, **caractérisé** en ce que le prisme est constitué de deux pièces massives dont l'une forme la face antérieure plane et l'autre la face postérieure plane du prisme, et qui présentent des faces en vis-à-vis de formes complémentaires, respectivement sphérique concave et sphérique convexe. appliquées l'une contre l'autre, qui autorisent une rotation relative des deux pièces.

9. Polychromateur à échelle selon la revendication 5, **caractérisé** en ce que la fente d'entrée (12) du monochromateur préalable (14) a une largeur double de celle de la fente d'entrée (46) du polychromateur à échelle (50).

Fig.1

Fig. 2